(19) Europäisches Patentamt
European Patent Office
Office européen des brevets

(11) **EP 2 834 297 B1**

(12) **FASCICULE DE BREVET EUROPEEN**

(45) Date de publication et mention de la délivrance du brevet:
**15.06.2016 Bulletin 2016/24**

(21) Numéro de dépôt: **13709229.2**

(22) Date de dépôt: **15.03.2013**

(51) Int Cl.:
*C08L 9/00* (2006.01)       *C08L 9/06* (2006.01)
*B60C 1/00* (2006.01)       *C08L 53/00* (2006.01)
*C08L 53/02* (2006.01)

(86) Numéro de dépôt international:
**PCT/EP2013/055343**

(87) Numéro de publication internationale:
**WO 2013/149803 (10.10.2013 Gazette 2013/41)**

(54) **PNEUMATIQUE DONT LA ZONE SOMMET EST POURVUE D'UNE SOUS-COUCHE COMPORTANT UN ÉLASTOMÈRE THERMOPLASTIQUE**

REIFEN MIT KRONE MIT EINER TEILSCHICHT MIT EINEM THERMOPLASTISCHEN ELASTOMER

TYRE OF WHICH THE CROWN AREA IS PROVIDED WITH A SUB-LAYER COMPRISING A THERMOPLASTIC ELASTOMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.04.2012 FR 1253000**

(43) Date de publication de la demande:
**11.02.2015 Bulletin 2015/07**

(73) Titulaires:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventeurs:
• **ABAD, Vincent**
**F-63040 Clermont-FerrandCedex 9 (FR)**
• **LIBERT, Romain**
**F-63040 Clermont-Ferrand Cedex 9 (FR)**
• **CUSTODERO, Emmanuel**
**F-63040 Clermont-Ferrand Cedex 9 (FR)**

(74) Mandataire: **Sidhu, Alban**
**MFP Michelin**
**Cer Ladoux-F35-DGD/PI**
**23, place des Carmes-Déchaux**
**63040 Clermont-Ferrand Cedex 9 (FR)**

(56) Documents cités:
**EP-A1- 2 366 560       EP-A2- 0 337 787
WO-A1-2011/076635       FR-A1- 2 910 382
FR-A1- 2 954 333**

**Description**

La présente invention est relative aux pneumatiques comportant une composition à base d'élastomères thermoplastiques (TPE) dans leur sommet (« *crown* »).

La bande de roulement des pneumatiques étant la partie du pneumatique en contact avec la surface de roulement, c'est la partie du pneumatique qui s'use le plus et le plus vite. Un objectif intéressant pour les manufacturiers de pneumatiques est d'être capables de retirer la bande de roulement d'un pneumatique, opération couramment appelée déchapage, afin de la remplacer par une autre bande de roulement, opération couramment appelée rechapage afin de prolonger la durée de vie d'un pneumatique sans avoir à le changer entièrement. Cependant avec les matériaux utilisés jusqu'à aujourd'hui, l'opération de déchapage reste complexe et donc coûteuse. C'est l'une des raisons pour lesquelles les pneumatiques de véhicules de tourisme sont aujourd'hui très peu rechapés. Il serait donc très avantageux de trouver un moyen de déchaper et rechaper plus efficacement les pneumatiques.

Dans ce but, la demanderesse a trouvé de manière surprenante qu'une sous-couche spécifique de bande de roulement permettait de faciliter les opérations de déchapage et de rechapage du pneumatique muni d'une telle sous-couche.

L'invention a pour objet un pneumatique radial pour véhicule automobile, comportant :

 o un sommet comportant une bande de roulement pourvue d'au moins une partie radialement externe destinée à entrer au contact de la route ;
 o deux bourrelets inextensibles, deux flancs reliant les bourrelets à la bande de roulement, une armature de carcasse passant dans les deux flancs et ancrée dans les bourrelets ;
 o une armature de sommet ou ceinture disposée circonférentiellement entre la partie radialement externe de la bande de roulement et l'armature de carcasse ;
 o une couche élastomère radialement interne dite « sous-couche » (ou sous-couche de bande de roulement), de formulation différente de la formulation de la partie radialement externe de la bande de roulement, cette sous-couche étant elle-même disposée circonférentiellement entre la partie radialement externe de la bande de roulement et l'armature de carcasse ;

caractérisé en ce que ladite sous-couche comprend au moins un élastomère thermoplastique, ledit élastomère thermoplastique étant un copolymère bloc comprenant au moins un bloc élastomère et au moins un bloc thermoplastique, le taux total d'élastomère thermoplastique étant compris dans un domaine variant de 65 à 100 pce (parties en poids pour cent parties d'élastomère),
et caractérisé en ce que ladite sous-couche présente un rapport de module élastique à 200°C et à 60°C différent de celui des couches adjacentes, de façon à ce que l'équation suivante est vérifiée avec chacune des couches adjacentes :

$$\frac{\dfrac{G'_A(200°C)}{G'_A(60°C)}}{\dfrac{G'_B(200°C)}{G'_B(60°C)}} \leq 0{,}6$$

dans laquelle $G'_A(T)$ représente la composante élastique du module de cisaillement de la sous-couche à la température T, et $G'_B(T)$ représente la composante élastique du module de cisaillement de la couche adjacente à la sous-couche à la température T.

Cette différence entre les variations de module de la sous-couche et des couches adjacentes est utilisée pour réaliser facilement par chauffage la séparation de la bande de roulement usée du reste de la structure du pneumatique et simplifier grandement l'opération de déchapage. De plus, une fois la bande de roulement enlevée par ramollissement de la sous-couche de bande de roulement, la présence d'un résidu d'élastomère thermoplastique sur la structure restante du pneumatique (également appelée « carcasse ») permet un rechapage facilité en utilisant une nouvelle bande de roulement présentant également, dans sa partie inférieure, une sous-couche comprenant un élastomère thermoplastique de nature identique ou compatible (c'est-à-dire similaire par sa composition chimique, sa masse, sa polarité et/ou sa température de transition vitreuse Tg). Il suffit dès lors de réaliser une mise en contact de la structure du pneumatique déchapée et de la bande de roulement, et d'appliquer une température et une pression suffisante à l'interface pour réaliser la fusion des deux couches thermoplastiques et obtenir ainsi un nouveau pneumatique rechapé. Cette opération pourrait être renouvelée quasi indéfiniment, limitée seulement par la durée de vie de la carcasse.

Un autre avantage majeur de l'invention est de permettre une économie de matériaux puisque qu'au lieu de changer tout le pneumatique, il devient possible très facilement de ne changer que la bande de roulement usée. Cette économie est par ailleurs très favorable à la préservation de l'environnement.

De préférence, l'invention concerne un pneumatique tel que défini ci-dessus, dans lequel la masse moléculaire moyenne en nombre de l'élastomère thermoplastique est comprise entre 30 000 et 500 000 g/mol.

Plus préférentiellement, l'invention concerne un pneumatique tel que défini ci-dessus, dans lequel le ou les blocs élastomères du copolymère bloc sont choisis parmi les élastomères ayant une température de transition vitreuse inférieure à 25°C ; préférentiellement choisis dans le groupe constitué par les élastomères éthyléniques, les élastomères diéniques et leurs mélanges, plus préférentiellement parmi les élastomères diéniques.

Plus préférentiellement encore, l'invention concerne un pneumatique tel que défini ci-dessus, dans lequel le ou les blocs élastomères du copolymère bloc sont des élastomères diéniques issus de l'isoprène, du butadiène ou d'un mélange de ces derniers.

De préférence, l'invention concerne un pneumatique tel que défini ci-dessus, dans lequel le ou les blocs thermoplastiques du copolymère bloc sont choisis parmi les polymères ayant une température de transition vitreuse supérieure à 80°C et, dans le cas d'un bloc thermoplastique semi cristallin, une température de fusion supérieure à 80°C ; et notamment, le ou les blocs thermoplastiques du copolymère bloc sont choisis dans le groupe constitué par les polyoléfines, les polyuréthannes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques et leurs mélanges ; et plus préférentiellement, le ou les blocs thermoplastiques du copolymère bloc sont choisis parmi les polystyrènes.

De préférence également, l'invention concerne un pneumatique tel que défini ci-dessus, dans lequel le ou les élastomères thermoplastiques sont choisis dans le groupe constitué par les élastomères thermoplastiques styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Selon un mode préférentiel, l'invention concerne un pneumatique tel que défini ci-dessus, dans lequel l'élastomère thermoplastique est le seul élastomère de la sous-couche.

Selon un autre mode préférentiel, l'invention concerne un pneumatique tel que défini ci-dessus, dans lequel la sous-couche comprend en outre un élastomère non thermoplastique à un taux d'au plus 35 pce.

Préférentiellement, l'invention concerne un pneumatique tel que défini ci-dessus, dans lequel la sous-couche comprend en outre au moins un polymère thermoplastique à base de polyéther. De préférence, le polymère thermoplastique à base de polyéther est choisi parmi les polymères de poly(para-phénylène éther). Plus préférentiellement, le taux de polymère thermoplastique à base de polyéther est inférieur à 40 pce, de préférence compris entre 2 et 35 pce.

De manière préférentielle, l'invention concerne un pneumatique tel que défini ci-dessus, dans lequel la sous-couche est dépourvue de polymère thermoplastique autre qu'un polyéther ou en contient moins de 30 pce, de préférence moins de 10 pce.

De manière très préférentielle, l'invention concerne un pneumatique tel que défini ci-dessus, dans lequel la sous-couche ne contient pas de système de réticulation.

L'invention concerne également préférentiellement un pneumatique tel que défini ci-dessus, dans lequel l'équation suivante est vérifiée pour la sous-couche avec chacune des couches adjacentes à la sous-couche :

$$\frac{\dfrac{G'_A(200°C)}{G'_A(60°C)}}{\dfrac{G'_B(200°C)}{G'_B(60°C)}} \leq 0,5$$

et plus préférentiellement, l'équation suivante est vérifiée pour la sous-couche avec chacune des couches adjacentes à la sous-couche :

$$\frac{\dfrac{G'_A(200°C)}{G'_A(60°C)}}{\dfrac{G'_B(200°C)}{G'_B(60°C)}} \leq 0,45$$

De préférence, l'invention concerne un pneumatique tel que défini ci-dessus, dans lequel l'équation suivante est vérifiée pour la sous-couche :

$$\frac{G_A'(100°C)}{G_A'(60°C)} > 0,4$$

et plus préférentiellement, l'équation suivante est vérifiée pour la sous-couche :

$$\frac{G_A'(100°C)}{G_A'(60°C)} > 0,5$$

L'invention concerne plus particulièrement les pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

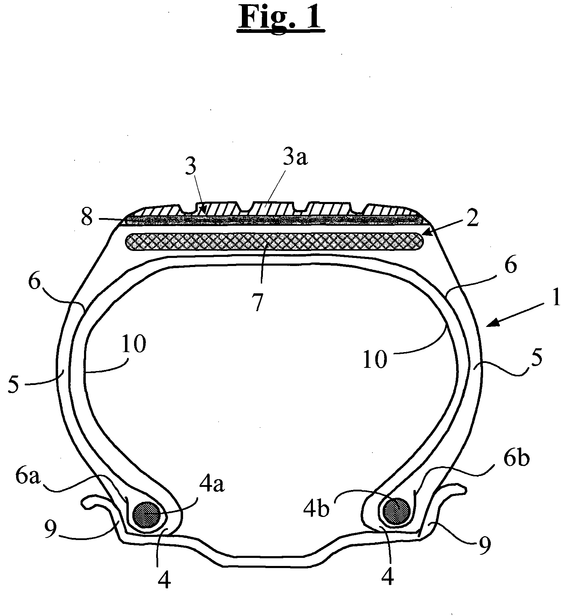

L'invention ainsi que ses avantages seront aisément compris à la lumière de la description et des exemples de réalisation qui suivent, ainsi que des figures 1 à 2 relatives à ces exemples qui schématisent, en coupe radiale, des exemples de pneumatiques radiaux conformes à l'invention.

## DESCRIPTION DETAILLEE DE L'INVENTION

Dans la présente description, sauf indication expresse différente, tous les pourcentages (%) indiqués sont des pourcentages en masse.

Au sens de la présente invention, la sous-couche est disposée circonférentiellement à l'intérieur du sommet du pneumatique, entre d'une part la partie la plus radialement externe de sa bande de roulement, c'est-à-dire la portion destinée à entrer au contact de la route lors du roulage, et d'autre part l'armature de sommet. Par sous-couche, on entend donc toute partie en caoutchouc radialement extérieure à l'armature de sommet du pneumatique qui ne donne pas sur l'extérieur du bandage pneumatique, qui est sans contact avec l'air ou un gaz de gonflage, en d'autres termes qui est donc située à l'intérieur même de la bande de roulement ou entre cette dernière et la ceinture (ou armature de sommet) du pneumatique.

Il faut donc comprendre que cette sous-couche peut être disposée:

- soit dans la bande de roulement elle-même, mais dans ce cas radialement sous la portion sculptée (c'est-à-dire radialement intérieurement par rapport à cette portion) de bande de roulement qui est destinée à entrer au contact de la route lors du roulage du pneumatique, tout au long de la durée de vie de ce dernier ;

- soit sous la bande de roulement (c'est-à-dire radialement intérieurement par rapport à cette bande de roulement), entre la bande de roulement et la ceinture (ou armature de sommet).

Préférentiellement, cette sous-couche est l'unique couche se situant entre la bande de roulement et l'armature de sommet, ou bien se situant à l'intérieur de la bande de roulement.

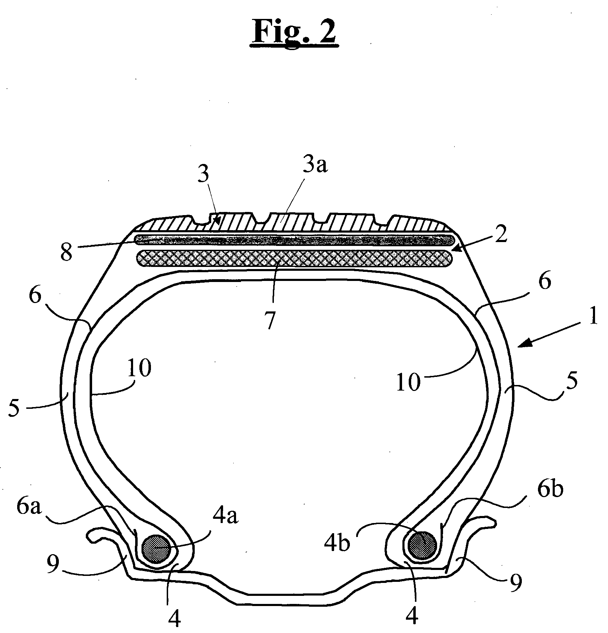

Les figures 1 et 2 annexées représentent en coupe radiale, de manière très schématique (notamment sans respect d'une échelle spécifique), deux exemples préférentiels de bandages pneumatiques pour véhicule automobile à armature de carcasse radiale, conformes à l'invention.

La figure 1 illustre un premier mode possible de réalisation de l'invention, selon lequel la sous-couche (8) est intégrée à la bande de roulement (3) elle-même, mais disposée sous la portion (3a) de la bande de roulement qui est destinée à entrer au contact de la route lors du roulage, pour constituer ce que l'on a coutume d'appeler une sous-couche de la bande de roulement. On peut rappeler aussi que, dans un tel cas, la bande de roulement est aussi communément appelée par l'homme du métier bande de roulement à structure *"cap-base"*, le terme *"cap"* désignant la portion sculptée de la bande de roulement destinée à entrer au contact de la route et le terme *"base"* désignant la portion non sculptée de la bande de roulement, de formulation différente, qui n'est quant à elle pas destinée à entrer au contact de la route.

Sur cette figure 1, le bandage pneumatique (1) schématisé comporte un sommet (2) comportant une bande de roulement (3) (pour simplifier, comportant une sculpture très simple) dont la partie radialement externe (3a) est destinée à entrer au contact de la route, deux bourrelets inextensibles (4) dans lesquels est ancrée une armature de carcasse (6). Le sommet (2), réuni auxdits bourrelets (4) par deux flancs (5), est de manière connue en soi renforcé par une armature de sommet ou "ceinture" (7) au moins en partie métallique et radialement externe par rapport à l'armature de carcasse (6).

Plus précisément, une ceinture de pneumatique est généralement constituée d'au moins deux nappes de ceinture superposées, dites parfois nappes "de travail" ou nappes "croisées", dont les éléments de renforcement ou "renforts" sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneumatique considéré. Chacune de ces deux nappes croisées est constituée d'une matrice de caoutchouc ou "gomme de calandrage" enrobant les renforts. Dans la ceinture, les nappes croisées peuvent être complétées par diverses autres nappes ou couches de caoutchouc auxiliaires, de largeurs variables selon les cas, comportant ou non des renforts ; on citera à titre d'exemple de simples coussins de gomme, des nappes dites "de protection" chargées de protéger le reste de la ceinture des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées.

Pour le renforcement des ceintures ci-dessus, en particulier de leurs nappes croisées, nappes de protection ou nappes de frettage, on utilise généralement des renforts sous forme de câbles d'acier (*"steel cords"*) ou des câblés textiles (*"textile cords"*) constitués de fils fins assemblés entre eux par câblage ou retordage.

L'armature de carcasse (6) est ici ancrée dans chaque bourrelet (4) par enroulement autour de deux tringles (4a, 4b), le retournement (6a, 6b) de cette armature (6) étant par exemple disposé vers l'extérieur du pneumatique (1) qui est ici représenté monté sur sa jante (9). L'armature de carcasse (6) est constituée d'au moins une nappe renforcée par des câbles textiles radiaux, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 7). Bien entendu, ce pneumatique (1) comporte en outre de manière connue une couche (10) de gomme ou élastomère intérieure (communément appelée " gomme intérieure " ou " *inner liner*") qui définit la face radialement interne du pneumatique et qui est destinée à protéger la nappe de carcasse de la diffusion d'air provenant de l'espace intérieur au pneumatique.

Cet exemple de pneumatique (1) conforme à l'invention de la figure 1 est caractérisé en ce que la partie base (8) de sa bande de roulement (3) est constituée par la sous-couche qui est décrite en détail dans ce qui suit.

La figure 2 illustre un autre mode possible de réalisation de l'invention, selon lequel la sous-couche (8) est externe à la bande de roulement (i.e., distincte de cette dernière), disposée cette fois, toujours dans le sommet (2), en dessous de la bande de roulement (i.e., radialement intérieurement par rapport à cette dernière) et au-dessus de la ceinture (i.e., radialement extérieurement par rapport à cette dernière), en d'autres termes entre la bande de roulement (3) et la ceinture (7).

Cette sous-couche a préférentiellement une épaisseur comprise entre 0,02 et 5 mm préférentiellement entre 0,05 et 3 mm. Selon un mode préférentiel, cette épaisseur est préférentiellement entre 0,2 et 3 mm, plus préférentiellement comprise entre 0,5 et 2,5 mm, et encore plus préférentiellement comprise entre 1 et 2,5 mm. Selon un autre mode de réalisation préférentiel, cette épaisseur est comprise entre 0,05 et 0,25 mm, plus préférentiellement 0,05 et 0,15 mm. L'homme du métier comprendra aisément que cette épaisseur sera variable d'une application à l'autre, en fonction de la destination des pneumatiques (véhicules deux-roues, tourisme, poids-lourd, génie civil).

Par ailleurs, le terme « pce » (en anglais « phr ») signifie au sens de la présente demande de brevet, partie en poids pour cent parties d'élastomère, thermoplastiques et non thermoplastiques confondus. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

1. Composition de la sous-couche

Le pneumatique selon l'invention a pour caractéristique essentielle d'être pourvu d'une couche élastomère dite « sous-couche » de formulation différente de la portion externe, sculptée, de la bande de roulement, ladite sous-couche comprenant au moins un élastomère thermoplastique, ledit élastomère thermoplastique étant un copolymère bloc comprenant au moins un bloc élastomère et au moins un bloc thermoplastique, et le taux total d'élastomère thermoplastique étant compris dans un domaine variant de 65 à 100 pce (parties en poids pour cent parties d'élastomère).

1.1. Elastomère thermoplastique (TPE)

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

L'élastomère thermoplastique utilisé pour la mise en oeuvre de l'invention est un copolymère à blocs dont la nature chimique des blocs thermoplastiques et élastomères peut varier.

### 1.1.1. Structure du TPE

La masse moléculaire moyenne en nombre (notée Mn) du TPE est préférentiellement comprise entre 30 000 et 500 000 g/mol, plus préférentiellement comprise entre 40 000 et 400 000 g/mol. En dessous des minima indiqués, la cohésion entre les chaînes d'élastomère du TPE, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 50 000 à 300 000 g/mol était particulièrement bien adaptée, notamment à une utilisation du TPE dans une composition pour sous-couche de pneumatique.

La masse moléculaire moyenne en nombre (Mn) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l; puis la solution est filtrée sur filtre de porosité 0,45 $\mu$m avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 $\mu$l. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE est de préférence inférieure à 3 ; plus préférentiellement inférieure à 2 et encore plus préférentiellement inférieure à 1,5.

Dans la présente demande, lorsqu'il est fait référence à la température de transition vitreuse du TPE, il s'agit de la Tg relative au bloc élastomère. Le TPE présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances de la sous-couche lors d'une utilisation à très basse température ; pour une telle utilisation, la Tg du TPE est plus préférentiellement encore inférieure ou égale à -10°C. De manière préférentielle également, la Tg du TPE est supérieure à -100°C.

De manière connue, les TPE présentent deux pics de température de transition vitreuse (Tg, mesurée selon ASTM D3418), la température la plus basse, étant relative à la partie élastomère du TPE, et la température la plus haute, étant relative à la partie thermoplastique du TPE. Ainsi, les blocs souples des TPE se définissent par une Tg inférieure à la température ambiante (25°C), tandis que les blocs rigides ont une Tg supérieure à 80°C.

Pour être de nature à la fois élastomère et thermoplastique, le TPE doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Les TPE peuvent être des copolymères avec un petit nombre de blocs (moins de 5, typiquement 2 ou 3), auquel cas ces blocs ont de préférence des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène pour un copolymère blocs styrène/ butadiène/ styrène).

Les TPE peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un copolymère dibloc : bloc thermoplastique / bloc élastomère. Le TPE peut aussi être un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère. Egalement, le TPE multibloc peut être un enchaînement linéaire de blocs élastomères - blocs thermoplastiques.

Selon une autre variante de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

1.1.2. Nature des blocs élastomères

Les blocs élastomères du TPE pour les besoins de l'invention, peuvent être tous les élastomères connus de l'homme de l'art. Ils possèdent généralement une Tg inférieure à 25°C, préférentiellement inférieure à 10°C, plus préférentiellement inférieure à 0°C et très préférentiellement inférieure à -10°C. De manière préférentielle également, la Tg bloc élastomère du TPE est supérieure à -100°C.

Pour les blocs élastomères à chaîne carbonée, si la partie élastomère du TPE ne comporte pas d'insaturation éthylénique, on parlera d'un bloc élastomère saturé. Si le bloc élastomère du TPE comporte des insaturations éthyléniques (c'est-à-dire des doubles liaisons carbone - carbone), on parlera alors d'un bloc élastomère insaturé ou diénique.

Un bloc élastomère saturé est constitué d'une séquence de polymère obtenu par la polymérisation d'au moins un (c'est-à-dire un ou plusieurs) monomère éthylénique, c'est-à-dire comportant une double liaison carbone - carbone. Parmi les blocs issus de ces monomères éthyléniques, on peut citer les blocs polyalkylènes tels que les copolymères statistiques éthylène - propylène ou éthylène - butylène. Ces blocs élastomères saturés peuvent aussi être obtenus par hydrogénation de blocs élastomères insaturés. Il peut aussi s'agir de blocs aliphatiques issus de la famille des polyéthers, des polyesters, ou des polycarbonates.

Dans le cas des blocs élastomères saturés, ce bloc élastomère du TPE est de préférence composé majoritairement d'unités éthyléniques. Par majoritairement, on entend un taux pondéral en monomère éthylénique le plus élevé par rapport au poids total du bloc élastomère, et de préférence un taux pondéral de plus de 50%, plus préférentiellement de plus de 75% et encore plus préférentiellement de plus de 85%.

Des diènes conjugués en $C_4$ - $C_{14}$ peuvent être copolymérisés avec les monomères éthyléniques. Il s'agit dans ce cas de copolymères statistiques. De préférence, ces diènes conjugués sont choisis parmi l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est choisi parmi le butadiène ou l'isoprène ou un mélange contenant du butadiène et de l'isoprène.

Dans le cas des blocs élastomères insaturés, ce bloc élastomère du TPE est de préférence composé majoritairement d'une partie élastomère diénique. Par majoritairement, on entend un taux pondéral en monomère diénique le plus élevé par rapport au poids total du bloc élastomère, et de préférence un taux pondéral de plus de 50%, plus préférentiellement de plus de 75% et encore plus préférentiellement de plus de 85%. Alternativement, l'insaturation du bloc élastomère insaturé peut provenir d'un monomère comportant une double liaison et une insaturation de type cyclique, c'est le cas par exemple dans le polynorbornène.

Préférentiellement, des diènes conjugués en $C_4$ - $C_{14}$ peuvent être polymérisés ou copolymérisés pour constituer un bloc élastomère diénique. De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou le butadiène ou un mélange contenant de l'isoprène et/ou du butadiène.

Selon une variante, les monomères polymérisés pour former la partie élastomère du TPE peuvent être copolymérisés, de manière statistique, avec au moins un autre monomère de manière à former un bloc élastomère. Selon cette variante, la fraction molaire en monomère polymérisé autre qu'un monomère éthylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

A titre d'illustration, cet autre monomère susceptible de copolymériser avec le monomère premier peut être choisi parmi les monomères éthyléniques tels que définis précédemment (par exemple l'éthylène), les monomères diènes, plus particulièrement, les monomères diènes conjugués ayant 4 à 14 atomes de carbone tels que définis précédemment (par exemple le butadiène), les monomères de type vinylaromatiques ayant de 8 à 20 atomes de carbone tels que définis ci-après ou encore, il peut s'agir d'un monomère tel que l'acétate de vinyle).

Lorsque le co-monomère est de type vinylaromatique, il représente avantageusement une fraction en motifs sur le nombre total de motifs du bloc thermoplastique de 0 à 50%, préférentiellement allant de 0 à 45% et encore plus préférentiellement allant de 0 à 40%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Selon un mode de réalisation préférentiel de l'invention, les blocs élastomères du TPE présentent au total, une masse moléculaire moyenne en nombre ("Mn") allant de 25 000 g/mol à 350 000g/mol, de préférence de 35 000 g/mol à 250 000 g/mol de manière à conférer au TPE de bonnes propriétés élastomériques et une tenue mécanique suffisante et compatible avec l'utilisation en sous-couche de pneumatique.

Le bloc élastomère peut également être un bloc comprenant plusieurs types de monomères éthyléniques, diéniques ou styréniques tels que définis ci-dessus.

Le bloc élastomère peut également être constitué de plusieurs blocs élastomères tels que définis ci-dessus.

1.1.3. Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg du bloc thermoplastique. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise oeuvre.

Pour les besoins de l'invention, les élastomères TPE comprennent un ou plusieurs bloc(s) thermoplastique(s) ayant de préférence une Tg (ou Tf, le cas échéant) supérieure ou égale à 80°C et constitué(s) à partir de monomères polymérisés. Préférentiellement, ce bloc thermoplastique a une Tg (ou Tf, le cas échéant) comprise dans un domaine variant de 80°C à 250°C. De préférence, la Tg (ou Tf, le cas échéant) de ce bloc thermoplastique est préférentiellement de 80°C à 200°C, plus préférentiellement de 80°C à 180°C.

La proportion des blocs thermoplastiques par rapport au TPE, tel que défini pour la mise en oeuvre de l'invention, est déterminée d'une part par les propriétés de thermoplasticité que doit présenter ledit copolymère. Les blocs thermoplastiques ayant une Tg (ou Tf, le cas échéant) supérieure ou égale à 80°C sont préférentiellement présents dans des proportions suffisantes pour préserver le caractère thermoplastique de l'élastomère selon l'invention. Le taux minimum de blocs thermoplastiques ayant une Tg (ou Tf, le cas échéant) supérieure ou égale à 80°C dans le TPE peut varier en fonction des conditions d'utilisation du copolymère. D'autre part, la capacité du TPE à se déformer lors de la préparation du pneu peut également contribuer à déterminer la proportion des blocs thermoplastiques ayant une Tg (ou Tf, le cas échéant) supérieure ou égale à 80°C.

Les blocs thermoplastiques ayant une Tg (ou Tf, le cas échéant) supérieure ou égale à 80°C peuvent être constitués à partir de monomères polymérisés de diverses natures, notamment, ils peuvent constituer les blocs suivants ou leurs mélanges :

- les polyoléfines (polyéthylène, polypropylène) ;
- les polyuréthannes ;
- les polyamides ;
- les polyesters ;
- les polyacétals ;
- les polyéthers (polyoxyde d'éthylène, polyphénylène éther) ;
- les polysulfures de phénylène ;
- les polyfluorés (FEP, PFA, ETFE) ;
- les polystyrènes (détaillés ci-dessous) ;
- les polycarbonates ;
- les polysulfones ;
- le polyméthylméthacrylate
- le polyétherimide
- les copolymères thermoplastiques tels que le copolymère acrylonitrile-butadiène-styrène (ABS).

Les blocs thermoplastiques ayant une Tg (ou Tf, le cas échéant) supérieure ou égale à 80°C peuvent aussi être obtenus à partir de monomères choisis parmi les composés suivants et leurs mélanges :

- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Les polystyrènes sont obtenus à partir de monomères styréniques. Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans l'élastomère TPE, est compris entre 5% et 50%. En dessous du minimum indiqué, le caractère thermoplastique de l'élastomère risque de diminuer de manière sensible tandis qu'au-dessus du maximum préconisé, l'élasticité de la sous-couche peut être affectée. Pour ces raisons, le taux de styrène est plus préférentiellement compris entre 10% et 40%.

Selon une variante de l'invention, le monomère polymérisé tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone, tels qu'ils sont définis dans la partie concernant le bloc élastomère.

Selon l'invention, les blocs thermoplastiques du TPE présentent au total, une masse moléculaire moyenne en nombre ("Mn") allant de 5 000 g/mol à 150 000g/mol, de manière à conférer au TPE de bonnes propriétés élastomériques et une tenue mécanique suffisante et compatible avec l'utilisation en sous-couche de pneumatique.

Le bloc thermoplastique peut également être constitué de plusieurs blocs thermoplastiques tels que définis ci-dessus.

### 1.1.4. Exemples de TPE

Par exemple, le TPE est un copolymère dont la partie élastomère est saturée, et comportant des blocs styrènes et des blocs alkylènes. Les blocs alkylènes sont préférentiellement de l'éthylène, du propylène ou du butylène. Plus préférentiellement, cet élastomère TPE est choisi dans le groupe suivant, constitué de copolymères diblocs, triblocs linéaires ou étoilés : styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB), styrène/ isobutylène/ styrène (SIBS) et les mélanges de ces copolymères.

Selon un autre exemple, le TPE est un copolymère dont la partie élastomère est insaturée, et qui comporte des blocs styrènes et des blocs diènes, ces blocs diènes étant en particulier des blocs isoprène ou butadiène. Plus préférentiellement, cet élastomère TPE est choisi dans le groupe suivant, constitué de copolymères diblocs, triblocs linéaires ou étoilés : styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Par exemple également, le TPE est un copolymère linéaire ou étoilé dont la partie élastomère comporte une partie saturée et une partie insaturée comme par exemple le styrène/ butadiène/ butylène (SBB), le styrène/ butadiène/ butylène/ styrène (SBBS) ou un mélange de ces copolymères.

Parmi les TPE multiblocs, on peut citer les copolymères comportant des blocs copolymère statistique d'éthylène et de propylène/ polypropylène, polybutadiène/ polyuréthane (TPU), polyéther/ polyester (COPE), polyéther/ polyamide (PEBA).

Il est également possible que les TPE donnés en exemple ci-dessus soient mélangés entre eux au sein de la sous-couche selon l'invention.

A titre d'exemples d'élastomères TPE commercialement disponibles, on peut citer les élastomères de type SEPS, SEEPS, ou SEBS commercialisés par la société Kraton sous la dénomination "Kraton G" (e.g. produits G1650, G1651, G1654, G1730) ou la société Kuraray sous la dénomination "Septon" (e.g. « Septon 2007 », « Septon 4033 », « Septon 8004 ») ; ou les élastomères de type SIS commercialisés par Kuraray, sous le nom « Hybrar 5125 », ou commercialisés par Kraton sous le nom de «D1161 » ou encore les élastomères de type SBS linéaire commercialisé par Polimeri Europa sous la dénomination « Europrene SOLT 166 » ou SBS étoilé commercialisé par Kraton sous la dénomination « D1184 ». On peut également citer les élastomères commercialisés par la société Dexco Polymers sous la dénomination de « Vector » (e.g. « Vector 4114 », « Vector 8508 »). Parmi les TPE multiblocs, on peut citer le TPE « Vistamaxx » commercialisé par la société Exxon ; le TPE COPE commercialisé par la société DSM sous la dénomination « Arnitel », ou par la société Dupont sous le dénomination « Hytrel », ou par la société Ticona sous le dénomination « Riteflex » ; le TPE PEBA commercialisé par la société Arkema sous le dénomination « PEBAX » ; le TPE TPU commercialisé par la société Sartomer sous le dénomination « TPU 7840 », ou par la société BASF sous le dénomination « Elastogran ».

### 1.1.5. Quantité de TPE

Si d'éventuels autres élastomères (non thermoplastiques) sont utilisés dans la composition, le ou les élastomères thermoplastiques (TPE) constituent la fraction majoritaire en poids ; ils représentent alors au moins 65%, de préférence au moins 70% en poids, plus préférentiellement au moins 75% en poids de l'ensemble des élastomères présents dans la composition élastomère. De manière préférentielle également, le ou les élastomères TPE représentent au moins 95% (en particulier 100%) en poids de l'ensemble des élastomères présents dans la composition élastomère.

Ainsi, la quantité totale d'élastomère TPE est comprise dans un domaine qui varie de 65 à 100 pce, préférentiellement de 70 à 100 pce et notamment de 75 à 100 pce. De manière préférentielle également, la composition contient de 95 à 100 pce d'élastomère TPE. Le ou les élastomères TPE sont préférentiellement le ou les seuls élastomères de la sous-couche.

### 1.2 Elastomère Non Thermoplastique

Le ou les élastomères thermoplastiques décrits précédemment sont suffisants à eux seuls pour que soit utilisable la sous-couche selon l'invention.

La composition de la sous-couche selon l'invention, peut comporter au moins un (c'est-à-dire un ou plusieurs) caoutchouc diénique à titre d'élastomère non thermoplastique, ce caoutchouc diénique pouvant être utilisé seul, ou en coupage avec au moins un (c'est-à-dire un ou plusieurs) autre caoutchouc ou élastomère non thermoplastique.

Le taux total d'élastomère non thermoplastique, optionnel, est compris dans un domaine variant de 0 à 35 pce, préférentiellement de 0 à 30 pce, plus préférentiellement de 0 à 25 pce, et plus préférentiellement encore de 0 à 5 pce. De manière préférentielle également, la sous-couche du pneumatique selon l'invention ne contient pas d'élastomère non thermoplastique.

Par élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone - carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelle que soit la catégorie ci-dessus, susceptible d'être utilisé dans les compositions conformes à l'invention:

(a) - tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) - un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication de la sous-couche du pneumatique selon la présente invention.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le paratertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

### 1.3. Polymère thermoplastique à base de polyéther

La sous-couche décrite précédemment peut comporter de manière optionnelle en plus de constituants présentés précédemment, un ou plusieurs polymères thermoplastiques à base de polyéther. Lorsqu'ils sont présents dans la composition, on préfère que le taux total de polymères thermoplastiques à base de polyéther soit inférieur à 40 pce, préférentiellement compris entre 2 et 35 pce, plus préférentiellement compris entre 5 et 30 pce, et très préférentiellement compris entre 10 et 25 pce. Ces polymères thermoplastiques peuvent être notamment les polymères de poly(para-phénylène éther) (noté en abrégé "PPE"). Ces polymères thermoplastiques PPE sont bien connus de l'homme du métier, ce sont des résines solides à température ambiante (20°C) compatibles avec les polymères styréniques, qui ont notamment utilisées pour augmenter la Tg d'élastomères TPE dont le bloc thermoplastique est un bloc styrénique (voir par exemple "Thermal, Mechanical and Morphological Analyses of Poly(2,6-dimethyl-1,4-phenylene oxide)/Styrene-Butadiene-Styrene Blends", Tucker, Barlow and Paul, Macromolecules, 1988, 21, 1678-1685).

### 1.4. Charge nanométrique ou renforçante

L'élastomère thermoplastique décrit précédemment est suffisant à lui seul pour que soit utilisable la sous-couche selon l'invention, néanmoins une charge renforçante peut être utilisée dans la composition.

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Lorsqu'une charge renforçante inorganique est utilisée, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

1.5. Additifs divers

La sous-couche décrite précédemment peut comporter par ailleurs les divers additifs usuellement présents dans les sous-couches connues de l'homme du métier. On choisira par exemple un ou plusieurs additifs choisis parmi les agents de protection tels que antioxydants ou antiozonants, anti-UV, les divers agents de mise en oeuvre ou autres stabilisants, ou encore les promoteurs aptes à favoriser l'adhésion au reste de la structure de l'objet pneumatique. De manière préférentielle, la sous-couche ne contient pas tous ces additifs en même temps et de manière encore plus préférentielle, la sous-couche ne contient aucun de ces agents.

Egalement et à titre optionnel, la composition de la sous-couche de l'invention peut contenir un système de réticulation connu de l'homme du métier. Préférentiellement, la composition ne contient pas de système de réticulation. De la même manière, la composition de la sous-couche de l'invention peut contenir une ou plusieurs charges micrométriques, inertes telles que les charges lamellaires connues de l'homme de l'art. De préférence, la composition de contient pas de charge micrométrique.

Optionnellement également, la composition de la sous-couche de l'invention peut contenir un agent plastifiant, tel qu'une huile d'extension (ou huile plastifiante) ou une résine plastifiante dont la fonction est de faciliter la mise en oeuvre de la sous-couche, particulièrement son intégration au pneumatique par un abaissement du module et une augmentation du pouvoir tackifiant. Lorsque la composition en comprend, on préfère que le taux de plastifiant varie de 0 à 80 pce, plus préférentiellement de 0 à 50 pce, plus préférentiellement encore de 0 à 30 pce, et notamment moins de 10 pce, selon la Tg et le module visés pour la sous-couche. Selon une variante préférentielle de l'invention, la composition de la sous-couche ne contient pas de plastifiant.

Outre les élastomères précédemment décrits, la composition de la sous-couche peut aussi comporter, toujours selon une fraction pondérale minoritaire par rapport à l'élastomère blocs, des polymères thermoplastiques autres que ceux à base de polyéther. On préfère que la composition de contienne pas de tels polymères thermoplastiques autres que ceux à base de polyéther, ou lorsqu'ils sont présents dans la composition, on préfère que le taux total de polymères thermoplastiques autres que ceux à base de polyéther soit inférieur à 30 pce, préférentiellement inférieur à 10 pce. De manière très préférentielle, la composition est dépourvue de tels polymères thermoplastiques autres que ceux à base de polyéthers, ou en contient moins de 5 pce.

2. Préparation de la sous-couche et du pneumatique selon l'invention

Les élastomères TPE peuvent être mis en oeuvre de façon usuelle pour des TPE, par extrusion ou moulage, par exemple à partir d'une matière première disponible sous la forme de billes ou de granulés.

La sous-couche pour le pneumatique selon l'invention est préparée de façon usuelle, par exemple, par incorporation des différents composants dans une extrudeuse bivis, de façon à réaliser la fusion de la matrice et une incorporation de tous les ingrédients, puis utilisation d'une filière permettant de réaliser le profilé.

Cette sous-couche peut être montée sur un pneumatique de manière usuelle, ledit pneumatique comprenant en plus de la sous-couche nécessaire pour les besoins de l'invention, une bande de roulement, un sommet et une armature de sommet, et préférentiellement, deux flancs et deux bourrelets, et une armature de carcasse ancrée aux deux bourrelets et s'étendant d'un flanc à l'autre.

On rappelle que dans le pneumatique selon l'invention, la possibilité d'un déchapage facilité est représentée par la différence entre le rapport de module élastique à 200°C et à 60°C de la sous-couche et celui des couches adjacentes, lorsque l'équation suivante est vérifiée avec chacune des couches adjacentes :

$$\frac{\frac{G'_A(200°C)}{G'_A(60°C)}}{\frac{G'_B(200°C)}{G'_B(60°C)}} \leq 0,6$$

dans laquelle $G'_A(T)$ représente la composante élastique du module de cisaillement de la sous-couche à la température T, et $G'_B(T)$ représente la composante élastique du module de cisaillement de la couche adjacente à la sous-couche à la température T. En effet, lorsque cette équation est vérifiée, on comprend que la sous-couche va se ramollir beaucoup plus avant 200°C que la couche adjacente, ce qui est une condition importante pour un déchapage facilité.

De préférence, la différence entre le rapport de module élastique à 200°C et à 60°C de la sous-couche et celui des couches adjacentes est telle que l'équation suivante est vérifiée :

$$\frac{\dfrac{G'_A(200°C)}{G'_A(60°C)}}{\dfrac{G'_B(200°C)}{G'_B(60°C)}} \leq 0,5$$

Et plus préférentiellement, la différence entre le rapport de module élastique à 200°C et à 60°C de la sous-couche et celui des couches adjacentes est telle que l'équation suivante est vérifiée :

$$\frac{\dfrac{G'_A(200°C)}{G'_A(60°C)}}{\dfrac{G'_B(200°C)}{G'_B(60°C)}} \leq 0,45$$

Selon les applications pneumatiques visées, il peut être préférable que la sous-couche possède des propriétés de module élastique telles que l'équation suivante est vérifiée :

$$\frac{G'_A(100°C)}{G'_A(60°C)} > 0,4$$

En effet, une variation de module élastique faible entre 60°C et 100°C est un bon indicateur du fait que la sous-couche ne s'est pas trop ramollie à ces températures, ce qui est souhaitable pour le bon fonctionnement du pneumatique, notamment s'il est destiné à des pneumatiques de véhicules de tourisme ou de poids-lourd, qui ont une température de fonctionnement dépassant les 60°C.

De préférence, la sous-couche possède des propriétés de module élastique telles que l'équation suivante est vérifiée :

$$\frac{G'_A(100°C)}{G'_A(60°C)} > 0,5$$

De préférence, la sous-couche possède des propriétés de module élastique telles que l'équation suivante est vérifiée :

$$\frac{G'_A(100°C)}{G'_A(60°C)} > 0,6$$

De préférence, la sous-couche possède des propriétés de module élastique telles que l'équation suivante est vérifiée :

$$\frac{G'_A(100°C)}{G'_A(60°C)} > 0,7$$

Les couches adjacentes à la sous-couche de bande de roulement sont typiquement la bande de roulement d'une part et d'autre part la ceinture (ou armature de sommet) du pneumatique.

Dans le cas où la sous-couche de bande de roulement est située à l'intérieur de la bande de roulement d'origine, on comprend que les deux couches adjacentes sont d'une part la partie supérieure de la bande de roulement (radialement externe, faisant l'objet du déchapage) et d'autre part la partie inférieure (radialement interne par rapport à la sous-couche) de la bande de roulement d'origine. Dans ce cas, il est possible que les deux couches adjacentes de la sous-couche soient de même nature, ou de nature différente.

Quelle que soit la nature chimique des couches adjacentes, l'équation présentée ci-dessus doit être vérifiée pour que l'invention fonctionne correctement.

Selon un mode de réalisation préférentiel, les couches adjacentes peuvent être constituées de compositions à base d'élastomères diéniques, bien connues de l'homme de l'art, et tels que ceux définis ci-dessus en tant qu'élastomères optionnels complémentaires des élastomères thermoplastiques de la sous-couche.

De telles couches adjacentes sont décrites dans de nombreux brevets bien connus de l'homme de l'art et comprennent généralement, outre les élastomères diéniques précédemment décrits, des additifs tels que ceux décrits ci-dessus pour la composition de la sous-couche et notamment des charges renforçantes, telles que de la silice et/ou du noir de carbone, des plastifiants sous forme d'huile ou de résine plastifiante, un système de réticulation et autres additifs bien connus de l'homme de l'art tels que des antioxydants.

Selon un autre mode de réalisation préférentiel, les couches adjacentes peuvent être également constituées de compositions à base d'élastomères thermoplastiques ou comprenant des élastomères thermoplastiques, et notamment ce peut être le cas de la bande de roulement.

Selon encore un autre mode de réalisation préférentiel, une des couches adjacentes peut être une couche constituée d'une composition à base d'élastomère diénique (notamment la ceinture de pneumatique) tandis que l'autre couche adjacente peut être constituée d'une composition à base d'élastomère thermoplastique (notamment la bande de roulement).

Alternativement, la possibilité d'un déchapage facilité est également représentée par la différence entre la variation de module élastique entre 60°C et 200°C de la sous-couche et celle des couches adjacentes, lorsque l'équation suivante est vérifiée avec chacune des couches adjacentes :

$$\frac{\dfrac{E'_A(200°C)}{E'_A(60°C)}}{\dfrac{E'_B(200°C)}{E'_B(60°C)}} \leq 0,6$$

dans laquelle $E'_A(T)$ représente la composante élastique du module de cisaillement de la sous-couche à la température T, et $E'_B(T)$ représente la composante élastique du module de cisaillement de la couche adjacente à la sous-couche à la température T. Dans ce cas le module $E'(T)$ est mesuré en compression.

Ainsi, l'invention peut être définie en remplaçant l'équation comportant les rapports de modules G' par l'équation ci-dessus comportant les rapports de modules E'. Les mêmes modes de réalisations sont envisageables et les préférences indiquées ci-dessus s'appliquent mutatis mutandis.

EXEMPLES DE RÉALISATION DE L'INVENTION

Des compositions de sous-couche pour pneumatique selon l'invention ont été préparées comme indiqué précédemment.

Des compositions de couches adjacentes pour pneumatique selon l'invention ont également été préparées selon les techniques connues de l'homme du métier.

La possibilité d'un déchapage facilité des pneumatiques selon l'invention peut être évaluée par des tests effectués sur différentes compositions de sous-couche et différentes compositions de couches adjacentes comme indiqué ci-après.

Mesures de E'(T)

La méthode de mesure de E'(T) se fait au moyen d'une machine DMA METRAVIB 450+ équipée des plateaux de compression PET10003000B.

L'essai réalisé est un essai de compression dynamique sur un échantillon cylindrique de diamètre 10mm et de hauteur 15mm.

La formulation TPE ou le mélange élastomère cru choisi est d'abord mis sous forme de feuille (ex : sous presse pour le TPE, au mélangeur à cylindres pour le mélange élastomères). On vient ensuite découper des petits disques de 10mm de diamètre au moyen d'un emporte-pièce. On empile ces disques jusqu'à obtenir une hauteur d'au moins 15mm.

Ces disques empilés sont ensuite placés dans un moule dont les dimensions internes sont 10mm de diamètre et 15mm de haut. Le tout est passé en presse pour faire fondre le mélange non réticulable ou cuire le mélange réticulable et constituer un échantillon cylindrique de 10mm de diamètre et de 15mm de haut.

Typiquement ce traitement thermique de cuisson (pour le mélange réticulable) ou de mise en forme (pour le mélange non réticulable) est de 17min à 170°C sous 16bars. Après mise en forme, et le cas échéant, cuisson, l'échantillon cylindrique obtenu est solidarisé aux plateaux de compression au moyen d'une colle Loctite 406. Une goutte de cette colle est d'abord déposée au centre du plateau inférieur. On pose l'échantillon cylindrique sur cette goutte et on dépose une seconde goutte au-dessus de celui-ci. On vient ensuite descendre la traverse du Metravib pour venir coller le plateau supérieur sur le dessus de l'échantillon, en prenant garde de ne pas l'écraser (force pratiquement nulle).

Après quelques minutes de séchage de la colle, on applique à cet échantillon cylindrique, une sollicitation sinusoïdale à un taux de déformation statique de 10% et un taux de déformation dynamique de 0,1% à 1 Hz. On étudie la variation du module E' en fonction de la température pour une plage variant 40°C à 200°C avec une vitesse de variation de 1°C/min.

Typiquement, on obtient alors un tracé de l'évolution du module E' en fonction de la température. A partir de cette courbe, on peut extraire des valeurs de E' à différentes températures, et par exemple E'(60°C), E'(100°C) et E'(200°C).

Mesures de G' (T)

La méthode de mesure de G'(T) utilise une machine de rhéologie RPA 2000LV (rhéomètre à disque oscillant) équipée du capteur de viscosité standard 200 in.lbs (22.6 Nm). La machine RPA permet de solliciter en torsion un échantillon de matériau enfermé dans une chambre (ou enceinte) à parois biconiques.

Pour réaliser la mesure, on dépose un échantillon de matériau d'environ 30mm de diamètre et de masse d'environ 5g dans l'enceinte du RPA (Un volume total de 8 cm$^3$ est considéré comme optimal ; la quantité est suffisante lorsqu'une petite quantité d'échantillon s'échappe de chaque côté de l'enceinte et est visible à la fin du test). De préférence, le matériau est préalablement découpé dans une feuille de ce matériau. Dans le cas où cette feuille de matériau n'a pas une épaisseur suffisante, on peut empiler les sections de cette feuille de matériau.

Dans un premier temps on réalise une opération de cuisson (dans le cas d'un mélange réticulable) ou de mise en forme (cas d'un mélange non réticulable), en appliquant à l'échantillon enfermé dans la chambre une température de 170°C pendant 17 min avec un cisaillement de 2,78% (soit un angle de 0,19°).

Ces premières étapes sont conformes aux conditions proposées dans la norme ISO 3417 de février 2009, qui donne les paramètres de préparation et de tests pour analyser un temps de vulcanisation d'un échantillon dans le rhéomètre.

A la fin de cette opération, l'échantillon est parfaitement moulé dans l'enceinte fermée du RPA, et le cas échéant, cet échantillon est réticulé. L'échantillon est ensuite refroidi à 40°C directement dans la chambre du RPA. Il est alors possible de débuter la mesure de la valeur de G' à 5% de cisaillement dynamique alterné (soit un angle de 0,36°) et 10Hz dans une gamme de température variant de 40 à 200°C.

On obtient une courbe de variation de G' en fonction de la température, sur laquelle on peut extraire les module G' de la composition à 60°C, 100°C et à 200°C.

Les étapes de mise en forme et le cas échéant, de réticulation de l'échantillon et de mesure de G' sont faites sans intervention, par programmation de la machine RPA.

EXEMPLES

Exemple 1

Dans un premier temps, des compositions de sous-couche ont été préparées comme indiqué précédemment et leurs modules G'(T) à 60°C et 200°C ont été mesurés. Les compositions et les résultats sont présentés dans le tableau 1 ci-dessous.

Tableau 1

| Composition | A-1 | A-2 | A-3 | A-4 |
|---|---|---|---|---|
| TPE 1 (1) | 100 | 100 | 0 | 0 |
| TPE 2 (2) | 0 | 0 | 100 | 0 |
| TPE 3 (3) | 0 | 0 | 0 | 100 |

EP 2 834 297 B1

(suite)

| Composition | A-1 | A-2 | A-3 | A-4 |
|---|---|---|---|---|
| PPE (4) | 0 | 15 | 15 | 0 |
| Résultats expérimentaux | | | | |
| G'(60°C) en KPa | 732 | 6630 | 6392 | 1585 |
| G'(100°C) en KPa | 493 | 3062 | 3932 | 1301 |
| G'(200°C) en KPa | 38 | 56 | 45 | 414 |
| G'(200°C) / G'(60°C) | 0,05 | 0,008 | 0,007 | 0,26 |
| G'(100°C) / G'(60°C) | 0,67 | 0,46 | 0,62 | 0,82 |

(1) Elastomère thermoplastique SBS linéaire « Europrene SOLT 166 » de la société Polimeri Europa ;
(2) Elastomère thermoplastique SIS « D1165» de la société Kraton ;
(3) Elastomère thermoplastique à bloc polyalphaméthylstyrène-polybutadiène-poly alphaméthylstyrène dans lequel les blocs polyalphaméthylstyrène représentent 11 % massique ;
(4) Poly(2,6-diméthyl-1,4-phénylène éther) SABIC Noryl SA120

Les compositions A-1, A-2, A-3 et A-4 correspondent à des compositions de sous-couche pour les besoins de l'invention. On peut noter dans ces compositions la grande économie de moyens, liée à l'utilisation d'élastomères TPE dans la composition de la sous-couche. En effet on note que l'élastomère TPE est suffisant à lui seul, comme seul composant de la composition de la sous-couche, pour que cette sous-couche soit utilisable selon l'invention.

Dans un deuxième temps, des compositions de couches adjacentes (notamment de bande de roulement) ont été préparées et leurs modules G'(T) à 60°C et 200°C ont été mesurés. Les compositions et les résultats sont présentés dans le tableau 2 ci-dessous.

Tableau 2

| Composition | B-1 | B-2 | B-3 | B-4 | B-5 | B-6 |
|---|---|---|---|---|---|---|
| BR (1) | 25 | | | 65 | | |
| SBR (2) | 75 | | | | | |
| SBR (3) | | | 40 | | | |
| SBR (4) | | 30 | | | | |
| SBR (5) | | 70 | | | | |
| SBR (6) | | | | | 40 | |
| SBR (7) | | | | | 60 | |
| NR (8) | | | 60 | 35 | | |
| Noir de carbone (9) | 4 | 4 | | | 4 | |
| Noir de carbone 2 (10) | | | | 60 | | |
| Noir de carbone 3 (11) | | | 30 | | | |
| Noir de carbone 4 (12) | | | 40 | | | |
| Silice (13) | 80 | 130 | | | 90 | |
| Agent de couplage (14) | 6,5 | 10 | | | 7,5 | |
| Résine 1 (15) | | 9 | | | | |
| Résine 2 (16) | 23 | | | | | |
| Résine 3 (17) | | | | | 20 | |
| Huile 1 (18) | 13 | | | 27 | 20 | |
| Huile 2 (19) | | 52 | | | | |

(suite)

| Composition | B-1 | B-2 | B-3 | B-4 | B-5 | B-6 |
|---|---|---|---|---|---|---|
| Huile 3 (20) | | | 14 | | | |
| Formophénol (21) | | | 1,6 | | | |
| HMT3H (22) | | | 0,8 | | | |
| Cire anti-ozone | 2 | 2 | | 1 | 2 | |
| Anti-oxydant (23) | 2 | 3 | 2 | 4 | 2 | |
| Acide stéarique (24) | 2 | 2 | 0,6 | 1 | 2 | |
| CBS (25) | 2 | 2 | | 1 | 2 | |
| TBBS (26) | | | 0,6 | | | |
| DPG (27) | 1,5 | 1,7 | | | 1,5 | |
| Soufre | 1,1 | 1,3 | 5 | 1,6 | 1,4 | |
| ZnO (28) | 1 | 3 | 7 | 3 | 2,7 | |
| TPE (29) | | | | | | 100 |
| Résultats expérimentaux | | | | | | |
| G'(60°C) en KPa | 3868 | 6232 | 1050 | 898 | 2271 | 1585 |
| G'(200°C) en KPa | 2022 | 2054 | 644 | 541 | 1382 | 414 |

(suite)

| Résultats expérimentaux | | | | | | |
|---|---|---|---|---|---|---|
| G'(200°C) / G'(60°C) | 0,52 | 0,33 | 0,61 | 0,60 | 0,61 | 0,26 |

(1) BR avec 0,5% de 1-2 ; 1,2% de trans ; 98,3% de cis 1-4 (Tg = - 108°C) (2) SBR solution avec 26,5% de styrène, 57 % de motifs polybutadiène 1-2 et 21% de motifs polybutadiène 1-4 trans (Tg = - 24°C) (3) SBR solution avec 26.5% de styrène, 24 % de motifs polybutadiène 1-2 et 50% de motifs polybutadiène 1-4 trans (Tg = -48°C) (4) SBR solution avec 41% de styrène, 24 % des motifs polybutadiène en 1-2 et 46% des motifs polybutadiène en 1-4 trans (Tg = - 28°C) (5) SBR solution avec 41% de styrène, 5 % des motifs polybutadiène en 1-2 et 78% des motifs polybutadiène en 1-4 trans (Tg = - 40°C) (6) SBR solution avec 41% de styrène, 24 % des motifs polybutadiène en 1-2 et 51% des motifs polybutadiène en 1-4 trans (Tg = - 25°C) (7) SBR solution avec 29% de styrène, 5 % des motifs polybutadiène en 1-2 et 80% des motifs polybutadiène en 1-4 trans (Tg = - 56°C) (8) Caoutchouc naturel (9) Noir de carbone N234 (10) Noir de carbone N683 (11) Noir de carbone N375 (12) Noir de carbone N772 (13) Silice « Zeosil 1165MP » de la société Rhodia (14) agent de couplage TESTP « Si69 » de la société Evonik-Degussa (15) Résine polylimonène « Dercolyte L120» de la société DRT (16) Résine C5/C9 «Escorez ECR-373» de société EXXON (17) Résine C5/C9 « CrayValley Wingtack » de la société STS (18) Huile MES « Catenex SNR » de la société Shell (19) Huile TDAE « Vivatec 500 » de la société Klaus Dahleke (20) Huile paraffinique « Extensoil 51 24T » de la société Repsol, ou « Tudalen 1968 » de la société Klaus Dahleke (21) N-1,3-diméthylbutyl-N-phénylparaphénylènediamine «Santoflex 6-PPD» de la société Flexsys (22) Résine novolaque formophénol «Peracit 4536K» de la société Perstorp (23) Hexamethylenetetramine (24) Stéarine "Pristerene" de la société Uniquema (25) N-cyclohexyl-2-benzothiazyl-sulfénamide « Santocure CBS » de la société Flexsys (26) Tertio-butyl benzothiazole sulfénamide de la société flexsys (27) Diphénylguanidine « Perkacit DPG » de la société Flexsys (28) Oxyde de zinc de grade industriel de la société Umicore (29) TPE à bloc polyalphaméthylstyrène-polybutadiène-polyalphaméthylstyrène avec 11% de blocs polyalphaméthylstyrènes

Au vu des résultats expérimentaux présentés ci-dessus, on peut calculer le rapport résultant de l'équation suivante :

$$\frac{\dfrac{G'_A(200°C)}{G'_A(60°C)}}{\dfrac{G'_B(200°C)}{G'_B(60°C)}}$$

Les résultats sont présentés dans le tableau 3, selon les sous-couches (A-1 à A-4) et les couches adjacentes (B-1 à B-6) utilisées.

Tableau 3

| Compositions | A-1 | A-2 | A-3 | A-4 |
|---|---|---|---|---|
| B-1 | 0,10 | 0,02 | 0,02 | 0,50 |
| B-2 | 0,16 | 0,03 | 0,02 | 0,79 |
| B-3 | 0,08 | 0,01 | 0,01 | 0,43 |
| B-4 | 0,09 | 0,01 | 0,01 | 0,43 |
| B-5 | 0,09 | 0,01 | 0,01 | 0,43 |
| B-6 | 0,20 | 0,03 | 0,03 | 1 |

Les résultats présentés au tableau 3 mettent en évidence les combinaisons possibles pour les pneumatiques de l'invention. Ainsi, on remarque que toutes les combinaisons proposées en exemple sont conformes au besoin des pneumatiques selon l'invention à l'exception de la combinaison de la sous-couche A-4 avec une couche adjacente de type B-2 ou B-6.

Exemple 2

Un pneumatique selon l'invention a été fabriqué possédant une composition de type A-2 comme sous-couche, une composition de type B-1 en bande de roulement et une composition de type B-3 en ceinture de pneumatique. Dans ce pneumatique, la sous-couche est placée entre la ceinture et la bande de roulement. La sous-couche a une épaisseur de 0,4mm.

Afin de déchaper le pneumatique selon l'invention, le pneumatique a été placé dans une étuve à 140°C pendant 15 minutes. A l'issue de ce chauffage, la bande de roulement a été très simplement retirée de la structure du pneumatique manuellement.

Par la suite, une nouvelle bande de roulement a été posée sur la même structure de pneumatique, la nouvelle bande de roulement possédant une composition de type B-1, et cette bande de roulement étant munie d'une sous-couche de composition de type A-2.

La nouvelle bande de roulement munie de sa sous-couche et la structure pneumatique ont été placées dans une étuve à 140°C pendant 15 minutes, puis la bande de roulement a été déposée sur la structure du pneumatique. Le pneumatique ainsi rechapé a été refroidi sous légère pression à température ambiante.

**Revendications**

1. Pneumatique radial (1) pour véhicule automobile, comportant :

   o un sommet (2) comportant une bande de roulement (3) pourvue d'au moins une partie (3a) radialement externe destinée à entrer au contact de la route ;
   o deux bourrelets inextensibles (4), deux flancs (5) reliant les bourrelets (4) à la bande de roulement (3), une armature de carcasse (6) passant dans les deux flancs (5) et ancrée dans les bourrelets (4) ;
   o une armature de sommet ou ceinture (7) disposée circonférentiellement entre la partie (3a) radialement externe de la bande de roulement (3) et l'armature de carcasse (6) ;
   o une couche élastomère radialement interne (8), dite « sous-couche », de formulation différente de la formulation de la partie radialement externe (3a) de la bande de roulement, cette sous-couche étant elle-même disposée circonférentiellement entre la partie (3a) radialement externe de la bande de roulement (3) et l'armature de sommet (7) ;

   caractérisé en ce que ladite sous-couche comprend au moins un élastomère thermoplastique, ledit élastomère thermoplastique étant un copolymère bloc comprenant au moins un bloc élastomère et au moins un bloc thermoplastique, le taux total d'élastomère thermoplastique étant compris dans un domaine variant de 65 à 100 pce (parties en poids pour cent parties d'élastomère) ;

   et caractérisé en ce que ladite sous-couche présente un rapport de module élastique à 200°C et à 60°C différent de celui des couches adjacentes, de façon à ce que l'équation suivante est vérifiée avec chacune des couches adjacentes :

$$\frac{\dfrac{G'_A(200°C)}{G'_A(60°C)}}{\dfrac{G'_B(200°C)}{G'_B(60°C)}} \leq 0,6$$

dans laquelle $G'_A(T)$ représente la composante élastique du module de cisaillement de la sous-couche à la température T, et $G'_B(T)$ représente la composante élastique du module de cisaillement de la couche adjacente à la sous-couche à la température T.

2. Pneumatique selon la revendication 1, dans lequel la masse moléculaire moyenne en nombre de l'élastomère thermoplastique est comprise entre 30 000 et 500 000 g/mol.

3. Pneumatique selon l'une quelconque des revendications précédentes, dans lequel le ou les blocs élastomères du copolymère bloc sont choisis parmi les élastomères ayant une température de transition vitreuse inférieure à 25°C.

4. Pneumatique selon l'une quelconque des revendications précédentes dans lequel le ou les blocs élastomères du copolymère bloc sont choisis dans le groupe constitué par les élastomères éthyléniques, les élastomères diéniques et leurs mélanges.

5. Pneumatique selon l'une quelconque des revendications précédentes dans lequel le ou les blocs thermoplastiques du copolymère bloc sont choisis parmi les polymères ayant une température de transition vitreuse supérieure à 80°C et, dans le cas d'un bloc thermoplastique semi cristallin, une température de fusion supérieure à 80°C.

6. Pneumatique selon l'une quelconque des revendications précédentes dans lequel le ou les blocs thermoplastiques du copolymère bloc sont choisis dans le groupe constitué par les polyoléfines, les polyuréthannes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques, et leurs mélanges.

7. Pneumatique selon l'une quelconque des revendications précédentes dans lequel le ou les élastomères thermoplastiques sont choisis dans le groupe constitué par les élastomères thermoplastiques styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

8. Pneumatique selon l'une quelconque des revendications précédentes, dans lequel l'élastomère thermoplastique est le seul élastomère de la sous-couche.

9. Pneumatique selon l'une quelconque des revendications précédentes, dans lequel la sous-couche comprend en outre au moins un polymère thermoplastique à base de polyéther.

10. Pneumatique selon la revendication 9, dans lequel le polymère thermoplastique à base de polyéther est choisi parmi les polymères de poly(para-phénylène éther).

11. Pneumatique selon l'une des revendications 9 ou 10, dans lequel le taux de polymère thermoplastique à base de polyéther est inférieur à 40 pce, de préférence compris entre 2 et 35 pce.

12. Pneumatique selon l'une quelconque des revendications précédentes dans lequel la sous-couche est dépourvue de polymère thermoplastique autre qu'un polyéther ou en contient moins de 30 pce, de préférence moins de 10 pce.

13. Pneumatique selon l'une quelconque des revendications précédentes, dans lequel la sous-couche ne contient pas de système de réticulation.

14. Pneumatique selon l'une des revendications précédentes dans lequel l'équation suivante est vérifiée pour la sous-couche avec chacune des couches adjacentes à la sous-couche :

$$\frac{\frac{G_A'(200°C)}{G_A'(60°C)}}{\frac{G_B'(200°C)}{G_B'(60°C)}} \leq 0,5$$

**15.** Pneumatique selon l'une des revendications précédentes dans lequel l'équation suivante est vérifiée pour la sous-couche :

$$\frac{G_A'(100°C)}{G_A'(60°C)} > 0,4$$

**Patentansprüche**

**1.** Radialreifen (1) für Kraftfahrzeug, umfassend:

o einen Scheitel (2), umfassend eine Lauffläche (3) mit mindestens einem radial äußeren Teil (3a), die dazu bestimmt ist, mit der Straße in Kontakt zu kommen;
o zwei nicht dehnbare Wülste (4), zwei Flanken (5), die die Wülste (4) mit der Lauffläche (3) verbinden, eine Karkassenbewehrung (6), die in die beiden Flanken (5) übergeht und in den Wülsten (4) verankert ist;
o eine Scheitelbewehrung oder einen Gürtel (7), die bzw. der umfänglich zwischen dem radial äußeren Teil (3a) der Lauffläche (3) und der Karkassenbewehrung (6) angeordnet ist;
o eine als "Unterschicht" bezeichnete radial innere Elastomerschicht (8) mit einer Formulierung, die von der Formulierung des radial äußeren Teils (3a) der Lauffläche verschieden ist, wobei diese Unterschicht umfänglich zwischen dem radial äußeren Teil (3a) der Lauffläche (3) und der Scheitelbewehrung (7) angeordnet ist;

**dadurch gekennzeichnet, dass** die Unterschicht mindestens ein thermoplastisches Elastomer umfasst, wobei es sich bei dem thermoplastischen Elastomer um ein Blockcopolymer mit mindestens einem elastomeren Block und mindestens einem thermoplastischen Block handelt, wobei der Gesamtgehalt an thermoplastischem Elastomer in einem Bereich von 65 bis 100 phe (Gewichtsteile pro hundert Teile Elastomer) liegt;
und **dadurch gekennzeichnet, dass** die Unterschicht ein Elastizitätsmodulverhältnis bei 200°C und bei 60°C aufweist, das von demjenigen der benachbarten Schichten verschieden ist, so dass die folgende Gleichung

$$\frac{\frac{G_A'(200°C)}{G_A'(60°C)}}{\frac{G_B'(200°C)}{G_B'(60°C)}} \leq 0,6$$
,

in der $G'_A(T)$ die elastische Komponente des Schermoduls der Unterschicht bei der Temperatur T darstellt und $G'_B(T)$ die elastische Komponente des Schermoduls der der Unterschicht benachbarten Schicht bei der Temperatur T darstellt, für jede der benachbarten Schichten gilt.

**2.** Reifen nach Anspruch 1, wobei das zahlenmittlere Molekulargewicht des thermoplastischen Elastomers zwischen 30.000 und 500.000 g/mol liegt.

**3.** Reifen nach einem der vorhergehenden Ansprüche, wobei der elastomere Block bzw. die elastomeren Blöcke des Blockcopolymers aus Elastomeren mit einer Glasübergangstemperatur von weniger als 25°C ausgewählt ist bzw. sind.

**4.** Reifen nach einem der vorhergehenden Ansprüche, wobei der elastomere Block bzw. die elastomeren Blöcke des Blockcopolymers aus der Gruppe bestehend aus Ethylen-Elastomeren, Dien-Elastomeren und Mischungen davon ausgewählt ist bzw. sind.

**EP 2 834 297 B1**

**5.** Reifen nach einem der vorhergehenden Ansprüche, wobei der thermoplastische Block bzw. die thermoplastischen Blöcke des Copolymers aus Polymer mit einer Glasübergangstemperatur von mehr als 80°C und im Fall eines teilkristallinen thermoplastischen Blocks einer Schmelztemperatur von mehr als 80°C ausgewählt ist bzw. sind.

**6.** Reifen nach einem der vorhergehenden Ansprüche, wobei der thermoplastische Block bzw. die thermoplastischen Blöcke des Copolymers aus der Gruppe bestehend aus Polyolefinen, Polyurethanen, Polyamiden, Polyestern, Polyacetalen, Polyethern, Polyphenylensulfiden, Polyfluorverbindungen, Poly-styrolen, Polycarbonaten, Polysulfonen, Poly-methylmethacrylat, Polyetherimid, thermoplastischen Copolymeren und Mischungen davon ausgewählt ist bzw. sind.

**7.** Reifen nach einem der vorhergehenden Ansprüche, wobei der thermoplastische Block bzw. die thermoplastischen Blöcke aus der Gruppe bestehend aus thermoplastischen Styrol/Butadien (SB)-, Styrol/ Isopren(SI)-, Styrol/Butadien/Isopren(SBI)-, Styrol/Butadien/Styrol(SBS)-, Styrol/Isopren/ Styrol(SIS)-, Styrol/Butadien/Isopren/Styrol(SBIS-)-Elastomeren und Mischungen dieser Copolymere ausgewählt ist bzw. sind.

**8.** Reifen nach einem der vorhergehenden Ansprüche, wobei das thermoplastische Elastomer das einzige Elastomer der Unterschicht ist.

**9.** Reifen nach einem der vorhergehenden Ansprüche, wobei die Unterschicht außerdem mindestens ein thermoplastisches Polymer auf Polyetherbasis umfasst.

**10.** Reifen nach Anspruch 9, wobei das thermoplastische Polymer auf Polyetherbasis aus Poly(paraphenylenether)-Polymeren ausgewählt ist.

**11.** Reifen nach einem der Ansprüche 9 oder 10, wobei der Gehalt an thermoplastischem Polymer auf Polyetherbasis weniger als 40 phe, vorzugsweise zwischen 2 und 35 phe, beträgt.

**12.** Reifen nach einem der vorhergehenden Ansprüche, wobei die Unterschicht außer einem Polyether kein thermoplastisches Polymer umfasst oder weniger als 30 phe, vorzugsweise weniger als 10 phe, daran enthält.

**13.** Reifen nach einem der vorhergehenden Ansprüche, wobei die Unterschicht kein Vernetzungssystem enthält.

**14.** Reifen nach einem der vorhergehenden Ansprüche, wobei die folgende Gleichung für die Unterschicht mit jeder der der Unterschicht benachbarten Schichten gilt:

$$\frac{\dfrac{G_A'(200°C)}{G_A'(60°C)}}{\dfrac{G_B'(200°C)}{G_B'(60°C)}} \leq 0{,}5$$

**15.** Reifen nach einem der vorhergehenden Ansprüche, wobei die folgende Gleichung für die Unterschicht gilt:

$$\frac{G_A'(100°C)}{G_A'(60°C)} > 0{,}4$$

**Claims**

**1.** Radial tyre (1) for a motor vehicle, comprising:

    o a crown (2) comprising a tread (3) provided with at least a radially outer part (3a) intended to come into contact with the road;
    o two non-stretchable beads (4), two sidewalls (5) connecting the beads (4) to the tread (3), a carcass reinforcement (6) passing into the two sidewalls (5) and anchored in the beads (4);
    o a crown reinforcement or belt (7) positioned circumferentially between the radially outer part (3a) of the tread (3) and the carcass reinforcement (6);

o a radially inner elastomer layer (8), referred to as "underlayer", having a formulation different from the formulation of the radially outer part (3a) of the tread, this underlayer being itself positioned circumferentially between the radially outer part (3a) of the tread (3) and the crown reinforcement (7);

**characterized in that** the said underlayer comprises at least one thermoplastic elastomer, the said thermoplastic elastomer being a block copolymer comprising at least one elastomer block and at least one thermoplastic block, the total content of thermoplastic elastomer being within a range varying from 65 to 100 phr (parts by weight per hundred parts of elastomer);

and **characterized in that** the said underlayer exhibits a ratio of elastic modulus at 200°C and at 60°C which is different from that of the adjacent layers, so that the following equation is adhered to with each of the adjacent layers:

$$\frac{\dfrac{G'_A(200°C)}{G'_A(60°C)}}{\dfrac{G'_B(200°C)}{G'_B(60°C)}} \leq 0.6$$

in which $G'_A(T)$ represents the elastic component of the shear modulus of the underlayer at the temperature T and $G'_B(T)$ represents the elastic component of the shear modulus of the layer adjacent to the underlayer at the temperature T.

2. Tyre according to Claim 1, in which the number-average molecular weight of the thermoplastic elastomer is between 30 000 and 500 000 g/mol.

3. Tyre according to either one of the preceding claims, in which the elastomer block or blocks of the block copolymer are chosen from elastomers having a glass transition temperature of less than 25°C.

4. Tyre according to any one of the preceding claims, in which the elastomer block or blocks of the block copolymer are selected from the group consisting of ethylene elastomers, diene elastomers and their mixtures.

5. Tyre according to any one of the preceding claims, in which the thermoplastic block or blocks of the block copolymer are chosen from polymers having a glass transition temperature of greater than 80°C and, in the case of a semi-crystalline thermoplastic block, a melting point of greater than 80°C.

6. Tyre according to any one of the preceding claims, in which the thermoplastic block or blocks of the block copolymer are selected from the group consisting of polyolefins, polyurethanes, polyamides, polyesters, polyacetals, polyethers, polyphenylene sulphides, polyfluorinated compounds, polystyrenes, polycarbonates, polysulphones, polymethyl methacrylate, polyetherimide, thermoplastic copolymers and their mixtures.

7. Tyre according to any one of the preceding claims, in which the thermoplastic elastomer or elastomers are selected from the group consisting of styrene/butadiene (SB), styrene/isoprene (SI), styrene/butadiene/isoprene (SBI), styrene/butadiene/styrene (SBS), styrene/isoprene/styrene (SIS) and styrene/butadiene/isoprene/styrene (SBIS) thermoplastic elastomers and the mixtures of these copolymers.

8. Tyre according to any one of the preceding claims, in which the thermoplastic elastomer is the only elastomer of the underlayer.

9. Tyre according to any one of the preceding claims, in which the underlayer additionally comprises at least one polyether-based thermoplastic polymer.

10. Tyre according to Claim 9, in which the polyether-based thermoplastic polymer is chosen from poly(para-phenylene ether) polymers.

11. Tyre according to either of Claims 9 and 10, in which the polyether-based thermoplastic polymer content is less than 40 phr, preferably between 2 and 35 phr.

12. Tyre according to any one of the preceding claims, in which the underlayer is devoid of thermoplastic polymer other than a polyether or comprises less than 30 phr, preferably less than 10 phr, thereof.

13. Tyre according to any one of the preceding claims, in which the underlayer does not comprise a crosslinking system.

14. Tyre according to one of the preceding claims, in which the following equation is adhered to for the underlayer with each of the layers adjacent to the underlayer:

$$\frac{\dfrac{G_A'(200°C)}{G_A'(60°C)}}{\dfrac{G_B'(200°C)}{G_B'(60°C)}} \leq 0.5$$

15. Tyre according to one of the preceding claims, in which the following equation is adhered to for the underlayer:

$$\frac{G_A'(100°C)}{G_A'(60°C)} > 0.4$$

# Fig. 1

# **Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4946899 A
- FR 2740778
- US 6013718 A
- FR 2765882
- US 5977238 A
- WO 0192402 A
- US 6815473 B
- WO 2004096865 A
- US 20060089445 A
- EP 1127909 A
- US 6503973 B

**Littérature non-brevet citée dans la description**

- **Z. FODOR ; J.P. KENNEDY.** *Polymer Bulletin,* 1992, vol. 29 (6), 697-705
- **J. E. PUSKAS ; G. KASZAS ; J.P. KENNEDY ; W.G. HAGER.** *Journal of Polymer Science Part A : Polymer Chemistry,* 1992, vol. 30, 41
- **J.P. KENNEDY ; N. MEGURIYA ; B. KESZLER.** *Macromolecules,* 1991, vol. 24 (25), 6572-6577
- **G. KASZAS ; J.E. PUSKAS ; P. KENNEDY.** *Applied Polymer Science,* 1990, vol. 39 (1), 119-144
- **J.E. PUSKAS ; G. KASZAS ; J.P. KENNEDY.** *Macromolecular Science, Chemistry,* 1991, vol. A28, 65-80
- **TUCKER ; BARLOW ; PAUL.** Thermal, Mechanical and Morphological Analyses of Poly(2,6-dimethyl-1,4-phenylene oxide)/Styrene-Butadiene-Styrene Blends. *Macromolecules,* 1988, vol. 21, 1678-1685